(19) **Europäisches Patentamt European Patent Office Office européen des brevets**

(11) **EP 3 498 542 B1**

(12) **EUROPEAN PATENT SPECIFICATION**

(45) Date of publication and mention of the grant of the patent:
**24.06.2020 Bulletin 2020/26**

(51) Int Cl.:
***B60R 21/235*** (2006.01)

(21) Application number: **18000586.0**

(22) Date of filing: **10.07.2018**

(54) **CURTAIN AIRBAG CUSHION**

SEITENAIRBAGKISSEN

COUSSIN DE RIDEAU GONFLABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2017 KR 20170170363**

(43) Date of publication of application:
**19.06.2019 Bulletin 2019/25**

(73) Proprietors:
• **IHC Co.,Ltd.**
**Seoul 06173 (KR)**
• **Dual Co., Ltd.**
**Seoul 06173 (KR)**

(72) Inventors:
• **KIM, Sang Kwon**
**Namyangju-si**
**Gyeonggi-do (KR)**
• **PARK, Seong Hwan**
**Buk-gu**
**Ulsan (KR)**

(74) Representative: **Lichti - Patentanwälte Partnerschaft mbB**
**Postfach 41 07 60**
**76207 Karlsruhe (DE)**

(56) References cited:
**EP-A1- 1 365 059    US-B1- 7 517 570**

**Description**

**Technical Field:**

The present invention relates to a curtain airbag cushion, and more particularly, to a curtain airbag cushion that is attached to the top end of the side surface of the interior of a vehicle in such a manner as to be deployed for a given period of time in the event of a side crush against the vehicle, thereby protecting the passenger in the vehicle from the impact applied from the side crush.

**Background Art:**

Generally, a curtain airbag is attached to the top end of the side window in the interior of a vehicle in such a manner as to be deployed at a fast speed in the event of a side crush to especially protect the head or shoulder of a passenger from the side crush. If the impact applied upon the side crush is sensed by an impact sensor of a vehicle body, gas is supplied to the interior of the curtain airbag by means of an inflator connected to the curtain airbag, so that the curtain airbag becomes instantly deployed.

Unlike driver or passenger airbags configured to emit gas just after the deployment so as to ensure the view of the passenger and also to provide the space for his or her escape from the vehicle, the curtain airbag first protects the back seat passenger from the side crush and secondarily maintains the internal gas pressure thereof for several seconds in preparation for vehicle overturning. Accordingly, the fabric of the curtain airbag needs high strength and high heat resistance so as to prevent the curtain airbag itself from being damaged or deformed even if the internal gas pressure is instantly increased, and further, the coupling portion of a panel has to be not broken even under any impact.

In conventional curtain airbag cushions, however, internal gas leaks through the sewn portion after the curtain airbag cushion deploying, so that the internal pressures of the curtain airbag cushions are not maintained to given levels. So as to prevent the internal gas of the curtain airbag cushion from leaking through the gaps formed on the yarn sewn on the fabric, accordingly, the present inventors have made various studies and then found that if a coating liquid is applied to the fabric of the curtain airbag cushion, the airtightness of the fabric is improved, and further, if a sewing portion is formed on a seam-sealed portion, the strength of the seam-sealed portion is increased.

Moreover, the structure of the sewing portion and the tether connecting portion is improved to prevent the aggregation of the sewing yarn and the strength of the tether connection portion is increased in the present invention.

EP 1 365 059 discloses a curtain airbag cushion comprising panels, a seam-sealed portion for connecting the panels, a sewing portion sewn along with the seam-sealed portion, a portion on which sealant is applied so as to increase tensile strength by more than 120%, wherein the fabric of the panels is coated with a coating liquid containing a silicone composition, wherein the coating liquid has the elongation at break of 180% or more; tensile strength of 3.0 MPa or more; tear strength measured according to JIS L-1096 6.15.1. The air permeability of the panel applied with the coating liquid is 0.15 cfm or less, wherein coating amount of the coating liquid is 30 g/itf or more.

**Technical Problem:**

Accordingly, the present invention has been made in view of the above-mentioned problems occurring in the prior art, and it is an object of the present invention to provide a curtain airbag cushion that is capable of allowing an internal pressure thereof to be kept for a given period of time when a side crush occurs on the side surface of a vehicle or when a vehicle is overturned, thereby protecting the passenger in the vehicle from the side crush or overturning and that is capable of maintaining the performance thereof even under the condition of a high temperature, a low temperature or a high humidity.

It is another object of the present invention to provide a curtain airbag cushion that improves the structure of the sewing portion and the tether connection portion to solve the aggregation of the sewing yarn and improves the strength of the tether connection portion.

**Technical Solution:**

To accomplish the above-mentioned objects, according to the present invention, there is provided a curtain airbag cushion including

Panels, a seam-sealed portion for connecting the panels, a sewing portion sewn along with the seam-sealed portion, openings for discharging air inside the airbag to prevent spreading of the seam-sealed portion when connecting the panels, a tether connection portion which sealant is applied so as to increase tensile strength by more than 120%, wherein the fabric of the panel is coated with a coating liquid containing a silicone composition, wherein the coating liquid has elongation at break of 180% or more; tensile strength of 3.0 MPa or more; tear strength of 4.0 KN/m or more; hardness of 30 or more,

wherein air permeability of the panel applied with the coating liquid is 0.15 cfm or less,

wherein coating amount of the coating liquid is 30 g/m² or more,

wherein the seam-sealed portion is applied to a sealant containing two-liquid type silicone resin for connecting the panels,

wherein the two-liquid type silicone resin has density of 1 to 1.5 g/cm³; tensile strength of 3.5 MPa or more; elongation of 1,050% or more,

wherein the starting point of the sewing portion is a back stitch structure,

wherein the sewing portion is composed of a sewing yarn made of polyamide or polyester,

wherein the sewing yarn has fineness of 1266 D or more; and stitch number per 25 mm is 9 to 15 EA; and the coating margin is 3 mm or more; and tensile strength of the sewing yarn is 18 kgf or more; and the sewing portion is sewn by a lock stitch or chain stitch method,

wherein the sewing portion adjacent to the openings has two sewing lines, and the sewing portion not adjacent to the openings has one sewing line.

According to the present invention, desirably, the fabric of the panel is polyamide fabric which has weft and warp densities of 44 to 48 EA/in; weight of 190 to 240 g/m²; tensile strength of 180 kgf/in or more; tearing strength of 20kgf or more; and elongation of 20 to 65%.

According to the present invention, desirably, the fabric of the panel is polyester fabric which has weft and warp densities of 49 to 53 EA/in; weight of 220 to 300 g/m²; tensile strength of 180 kgf/in or more; tearing strength of 15 kgf or more; and elongation of 20 to 65%.

**Advantageous Effects:**

According to the present invention, the curtain airbag cushion is made of the fabric having excellent airtightness and is provided with the sealant and sewing yarn having high strength so that it can constantly maintain the internal pressure thereof, without any damage, when a side crush occurs on the side surface of a vehicle or when a vehicle is overturned, and in addition, it is not deteriorated in performance even under various external environments.

Further, the structure of the sewing portion and the tether connection portion is improved to solve the aggregation of the sewing yarn and the strength of the tether connection portion is remarkably improved.

**Description of Drawings:**

Fig. 1 is a schematic view showing the entire structure of a curtain airbag cushion according to the present invention.

Fig. 2 is a schematic view showing the state wherein gas leaks from the interior of the curtain airbag cushion through sewing holes formed by the sewing line for coupling panels.

Fig. 3 is a schematic view showing the state wherein the sewing holes are separated from the interior of the curtain airbag cushion by a seam-sealed portion according to the present invention.

Fig. 4 is a schematic view showing that the tether connection portion is sealed.

Fig. 5 is a schematic view showing a force received by the openings when the internal pressure of the curtain airbag cushion rises.

Fig. 6 is a schematic view showing that the sewing yarn is formed in a 2-line in the sewing part adjacent to the openings.

**Mode for Invention:**

Hereinafter, an explanation on a curtain airbag cushion according to the present invention will be in detail given with reference to the attached drawing.

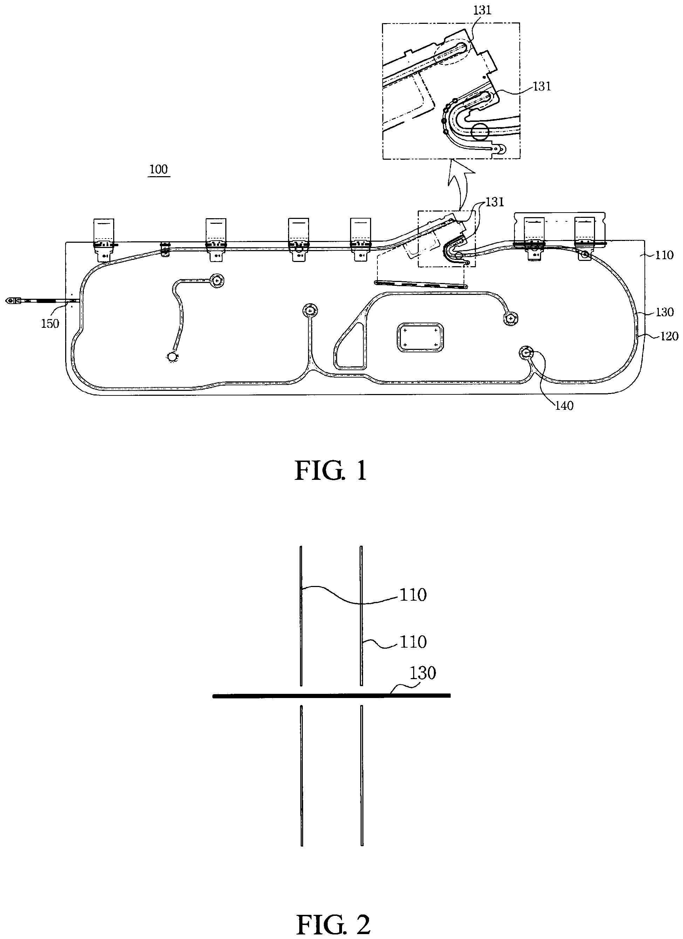

Fig. 1 is a schematic view showing the entire structure of a curtain airbag cushion according to the present invention. As shown in Fig. 1, a curtain airbag cushion 100 according to the present invention includes a panel 110, a seam-sealed portion 120, a sewing portion 130, and openings 140, and in the panel, two panels are doubly joined by a seam-sealed portion and a sewing portion.

The coating liquid containing a silicone composition is applied to the panel to enhance the airtightness of the curtain airbag cushion 100.

The curtain airbag cushion 100 should protect the passengers in the vehicle from the side crush as well as from vehicle overturning. Accordingly, the internal pressure of the curtain airbag cushion 100 has to be maintained for several seconds. If the curtain airbag cushion is made of a fabric to which no coating liquid is applied, gas leaks from the gaps between a sewing yarn and fabric, thereby making it difficult to maintain the internal pressure of the curtain airbag cushion.

The coating liquid contains two-liquid type silicone resin having a viscosity of 15,000 to 43,000 mPa·s after mixing of a main component and a curing agent, and has the elongation at break of 180% or more, tensile strength of 3.0 MPA or more, tearing strength of 4.0 KN/m or more, and hardness of 30 or more, and the air permeability of the fabric of the curtain airbag cushion 100 after the application of the coating liquid is 0.15 cfm or less.

The curtain airbag cushion of the present invention remarkably improves the pressure resistance performance by the fabric to which the coating liquid is applied. The initial pressure after inflation of the curtain airbag cushion is 300 to 500 kPa, the internal pressure after 30 ms is 10 kPa or more, the internal pressure after 40 ms is 20 kPa or more, the internal pressure after 1.5 s is 7 kPa or more and the internal pressure after 6.0 s is 4 kPa.

A method for applying the coating liquid to the surface of the fabric of the curtain airbag cushion 100 may be carried out by means of well-known methods. For example, the method may be carried out by means of air knife coating, comma coating, roll coating, dip coating, spray coating, and the like. Particularly, the air knife coating is carried out wherein a relatively thin film is formed on the surface of the fabric so that the invasion of the coating liquid into the fabric is suppressed and soft coating fabrics are desirably formed.

The panel 110 in the present invention is fabric by plain weave, and the yarn constituting the panel 110 is made of polyester or polyamide. The polyester or polyamide yarn has elongation at break of 15 to 30%. If the elongation at break is less than 15%, the fabric of the curtain airbag cushion 100 may be damaged due to the lack of elasticity upon the deployment of the curtain airbag cushion 100, and contrarily, if the elongation at break is more than 30%, the fabric of the curtain airbag cushion 100 may be loose due to excessive elasticity. Further, the yarn of the curtain airbag cushion 100 has a shrinkage rate of 4 to 8% at a high temperature (180°C), and if the shrinkage rate is less than 4% or more than 8%, the fabric may be seriously deformed according to the internal environment of the curtain airbag cushion 100.

Desirably, the polyester yarn used in the present invention is a polyethylene terephthalate (hereinafter referred to as "PET") yarn. The PET yarn has the fineness of 470 to 590 Dtex. If the fineness of the PET yarn is less than 470 Dtex, the strength of the fabric becomes low due to the lack of the strength of the yarn, thereby making it impossible to satisfy the performance of the curtain airbag cushion 100, and contrarily, if the fineness of the PET yarn is more than 590 Dtex, the weight of the curtain airbag cushion 100 becomes increased, thereby reducing the fuel efficiency of the vehicle.

The polyester fabric, which is woven by the PET yarn and with the coating liquid applied to the surface thereof, has weft and warp densities of 49 to 53 EA/in and weight of 220 to 300 g/m². If the weight is less than 220 g/m², the strength of the fabric becomes low so that the fabric cannot be used as the fabric of the curtain airbag cushion 100, and contrarily, if the weight is more than 300 g/m², the fuel efficiency of the vehicle may be drastically reduced so that the fabric cannot be desirably used as the fabric of the curtain airbag cushion 100.

Further, the polyester fabric has the tensile strength of 180 kgf/in or more and the tearing strength of 15 kgf or more. If the tensile strength of the polyester fabric is less than 180 kgf/in or the tearing strength thereof is less than 15 kgf, the performance required as the curtain airbag cushion 100 cannot be satisfied, thereby failing to protect the passengers in the vehicle from the impact.

On the other hand, the polyamide yarn used in the present invention is a nylon yarn, and desirably, it is a nylon 66 yarn. The nylon 66 yarn has the fineness of 470 to 500 Dtex. If the fineness of the nylon 66 yarn is less than 470 Dtex, the strength of the fabric becomes low, thereby making it impossible to satisfy the performance of the curtain airbag cushion 100 as required, and contrarily, if the fineness of the nylon 66 yarn is more than 500 Dtex, the weight of the curtain airbag cushion 100 becomes increased, thereby reducing the fuel efficiency of the vehicle.

The polyamide fabric, which is woven by the nylon 66 yarn and with the coating liquid applied to the surface thereof, has weft and warp densities of 44 to 48 EA/in and weight of 190 to 240 g/m². If weight is less than 190 g/m², the strength of the fabric becomes seriously low so that the fabric cannot be used as the fabric of the curtain airbag cushion 100, and contrarily, if weight is more than 240 g/m², the fuel efficiency of the vehicle may be drastically reduced so that the fabric cannot be desirably used as the fabric of the curtain airbag cushion 100.

Further, the polyamide fabric has the tensile strength of 180 kgf/in or more and the tearing strength of 20 kgf or more. If the tensile strength of the polyamide fabric is less than 180 kgf/in or the tearing strength thereof is less than 20 kgf, the performance required as the curtain airbag cushion 100 cannot be satisfied, thereby failing to protect the passengers in the vehicle from the impact.

The fabric of the curtain airbag cushion 100 has elongation of 20 to 65%, and if the elongation is less than 20% or more than 65% so as to cause the elasticity to be seriously decreased or increased, the performance of the curtain airbag cushion 100 may be deteriorated. Since the nylon 66 yarn has higher elongation than the PET yarn, the elongated volume of the PET fabric is relatively smaller than that of the nylon 66 fabric under the same external conditions as each other. According to these characteristics of the PET fabric, if the fabric of the curtain airbag cushion 100 is made of the PET yarn, the internal pressure of the curtain airbag cushion 100 is higher than that of the curtain airbag cushion 100 made of the nylon 66 yarn.

On the other hand, in the present invention, the seam-sealed portion is a portion to which a sealant including two-liquid type silicone resin is applied.

The silicone resin composition has the density of 1 to 1.5 g/cm$^3$, tensile strength of 35.69 kgf or more, and elongation of 1050% or more, and the silicone resin composition is left at a room temperature for 12 hours or more so that it is cured.

The sealant is applied to the panel 110 to the width of 8 to 18 mm. If the application width of the sealant is deviated from the above-mentioned range, the application thickness of the sealant is excessively increased or decreased so as to cause the curtain airbag cushion 100 to be damaged upon the deployment thereof. Accordingly, the application thickness of the sealant has to be maintained in the range of 0.5 to 1.2 mm.

The weight of the applied sealant is in the range of 0.061 to 0.147 g/cm$^2$. If the weight of the applied sealant is less than 0.061 g/cm$^2$, the adhesion force of the sealant is decreased to cause gas leakage upon the deployment of the curtain airbag cushion 100, and contrarily, if the weight of the applied sealant is more than 0.147 g/cm$^2$, undesirably, the time for curing the sealant is excessively consumed.

In the present invention, the sewing portion is introduced to strengthen the joint portion along the seam-sealed portion, and is formed by going through the seam-sealed portion.

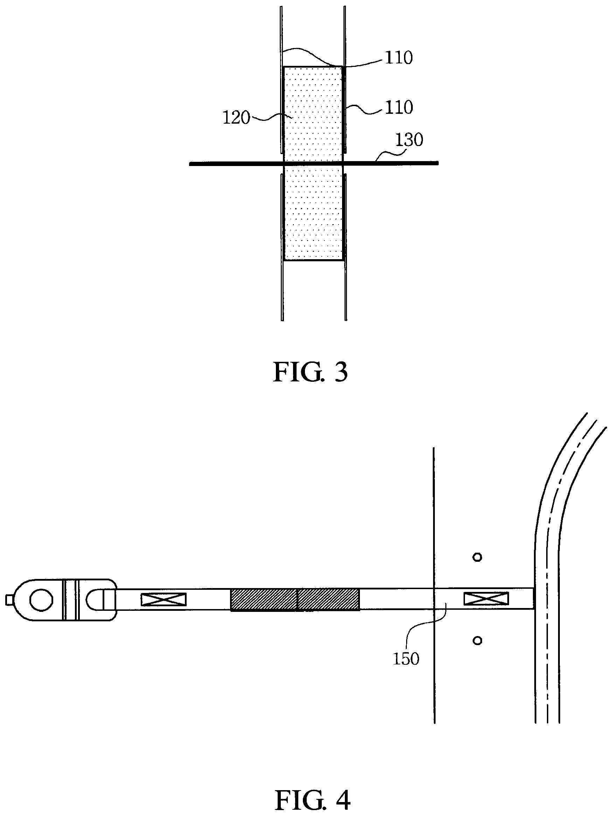

If the panels are coupled to each other by means of only a sewing yarn, the internal gas of the curtain airbag cushion 100 may leak through the holes formed by the sewing (Fig. 2), but according to the present invention, the holes formed by the sewing are blocked from the interior of the curtain airbag cushion 100 by means of the silicone sealant of seam-sealed portion, thereby causing no gas leakage (Fig. 3).

The sewing yarn of the sewing portion may be selected from a group consisting of a polyester type and a polyamide type, and nylon 66 is preferably used.

The fineness of the sewing yarn is 1266 D or more, preferably 1300 D or more.

If the fineness of the sewing yarn is less than 1266 D, the sewing yarn may be damaged upon the deployment of the curtain airbag cushion 100, so that it is desirable that the fineness of the sewing yarn is more than 1266 D. Further, the sewing has the stitch number per 25 mm of 9 to 15 EA and the coating margin of 3 mm or more. The coating margin used in the present invention means the distance from the end of the applied sealant to the point through which the sewing yarn is passed, and if the coating margin is less than 3 mm, the function of the sealant is not exerted upon the deployment of the curtain airbag cushion 100, thereby causing the gas leakage from the sewn portion.

The starting point and the ending point of the sewing portion are a back stitch structure (Fig. 1 partial extension), to prevent the sewing yarn from aggregating at the sewing end.

If the aggregating occurs, interference occurs when fixing to the curtain airbag cushions after the inflator assembling, and the fixing may not be done.

The back stitching is performed at a distance of 2 to 3 mm from the end of the panel.

In the present invention, the tether secures the curtain airbag cushion to the front portion of the vehicle to connect the curtain airbag cushion to the vehicle.

As shown in Fig. 4, when the sealant is applied to the tether connection portion, the strength of the curtain airbag cushion is increased by 120% or more compared to the conventional curtain airbag cushion

On the other hand, panels are coupled to each other by means of the sealant and the sewing yarn, thereby increasing the tensile strength and the tearing strength of the fabric of the curtain airbag cushion 100. In more detail, when the strengths of the seam-sealed portion 120 before and after the sewing are compared with each other, after the sewing the tensile strength of the seam-sealed portion 120 is increased by 150% or more and the tearing strength thereof is increased by 120% or more, higher than before the sewing, under the conditions of a room temperature, cycling, heat aging, ozone and humidity. The cycling condition is applied by selecting any one of a first cycling condition and a second cycling condition as mentioned below.

First cycling condition:

    a) Twenty four hours elapse at a temperature of 38°C and humidity of 95%
    b) Twenty four hours elapse at a temperature of 80°C
    c) Six hours elapse at a temperature of 29°C
    d) The above processes are repeated two times

Second cycling condition:

    a) Twenty nine hours elapse at a temperature of -40°C
    b) Nineteen hours elapse at a temperature of 22°C and humidity of 95%

c) Twenty nine hours elapse at a temperature of 107°C

d) Nineteen hours elapse at a temperature of 22°C and humidity of 95%

e) The above processes are repeated three times

Heat aging condition:

Four hundred eight hours elapse at a temperature of 108°C.

Ozone condition:

Fourteen days elapse at an ozone gas concentration of 0.5 ppm and a temperature of 38°C

Humidity condition:

Four hundred eight hours elapse at a temperature of 70°C and humidity of 95%

The strength of the seam-sealed portion 120 according to the present invention is more than 18 kgf. If the strength of the seam-sealed portion 120 is less than 18 kgf, the seam-sealed portion 120 is broken due to the momentary pressure increment of the interior of the curtain airbag cushion 100, thereby making it impossible to maintain the internal pressure over a given period of time.

The strength of the fabric of the curtain airbag cushion 100 is maintained even under the conditions of a high temperature and a high humidity, a low temperature, or a high concentration of ozone. Accordingly, the performance of the curtain airbag cushion 100 cannot be deteriorated even at a temperature in summer, a high humidity condition, or a high concentration of ozone.

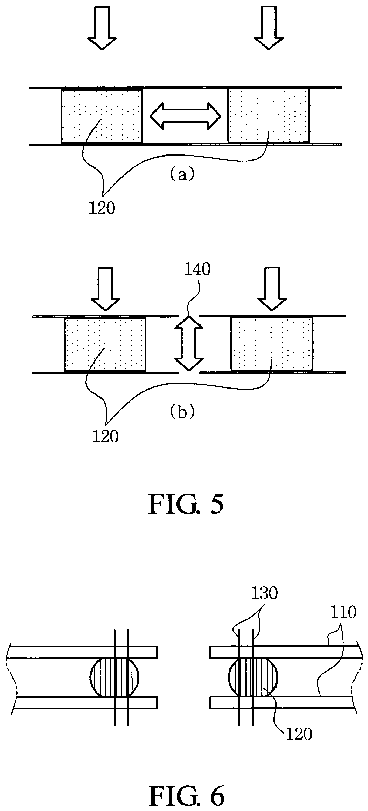

In the present invention, the openings are adapted to release the stress against the internal pressure of the curtain airbag cushion, and exhausts the inside air through the opening when the panel is coupled (Fig. 5). If a side crush occurs on the side surface of the vehicle, the gas is injected into the curtain airbag cushion 100 through the operation of the inflator to permit the curtain airbag cushion 100 to be deployed at a fast speed. In this process, the sealants of the second seam-sealed portions 122 may be pushed. So as to prevent such problem from happening, the openings 140 are provided, and the shapes of the openings are straight type (-) or cross type (+) openings 140. In addition, of course, circular and polygonal openings 140 may be provided.

On the other hand, a seam sealant is applied in a circular shape adjacent to the openings of the present invention, and a sewing portion is formed along the seam sealant.

To increase the strength of the circular seam sealant application portion, the sewing portion adjacent to the opening portion is formed in 2-line sewing (Fig. 6), and the sewing portion not adjacent to the opening portion is formed in 1-line sewing.

Hereinafter, the present invention will now be described in detail by way of particular examples. The examples of the present invention are proposed to allow the present invention to be in more detail described, and accordingly, they do not limit the scope of the present invention.

Example 1:

A first panel and a second panel, which were made by applying silicone coating liquid (LCF 3600 made by Dow Corning) to the nylon 66 fabric woven with a nylon 66 yarn (having the fineness of 470 Dtex/420 D, break strength of 39.4 N, elongation at break of 21.6%, and shrinkage rate of 5.7% at a high temperature), were coupled to each other by means of a silicone sealant (SE 6777 made by Dow Corning) and then sewn by means of a sewing yarn (20M made by AMANN), thereby manufacturing the curtain airbag cushion according to the present invention. The curtain airbag cushion had straight type openings, and the starting point and the ending point of the sewing portion were the back stitch structure, and the tether connection portion was sealed.

Example 2:

A first panel and a second panel, which were made by applying silicone coating liquid (LCF 3600C made by Dow Corning) to the PET fabric woven with a PET yarn (having the fineness of 566.5 Dtex/500 D, break strength of 46.2 N, elongation at break of 19.3%, and shrinkage rate of 6.9% at a high temperature), were coupled to each other by means of a silicone sealant (SE 6777 made by Dow Corning) and then sewn by means of a sewing yarn (20M made by AMANN), thereby manufacturing the curtain airbag cushion according to the present invention. The curtain airbag cushion had straight type openings, and the starting point and the ending point of the sewing portion were the back stitch structure, and the tether connection portion was sealed.

Comparison Example 1:

A curtain airbag cushion was manufactured in the same manner as in Example 1, except not applying the silicone coating liquid to the fabric.

Comparison Example 2:

A curtain airbag cushion was manufactured in the same manner as in Example 2, except not applying the silicone coating liquid to the fabric.

Comparison Example 3:

A curtain airbag cushion was manufactured in the same manner as in Example 1, except not sewing with the sewing yarn.

Comparison Example 4:

A curtain airbag cushion was manufactured in the same manner as in Example 2, except not sewing with the sewing yarn.

Comparison Example 5:

A curtain airbag cushion was manufactured in the same manner as in Example 1, except that the tether connection portion was not sealed.

The physical properties of the fabrics of the manufactured curtain airbag cushions before and after the application of the coating liquids were evaluated and listed in Tables 1 and 2.

(1) Weight of fabric (g/m$^2$)

Weight of a piece of fabric of 250 mm x 250 mm was measured, and the measured weight was divided by the square meter (0.0625 m$^2$) of the piece of fabric, thereby evaluating weight of fabric.

(2) Thickness (mm)

The thickness of fabric was measured by means of a fabric thickness measurer.

(3) Tensile strength (kgf/in)

A piece of fabric of 100 mm x 300 mm was made, and a force, which was generated when the fabric was cut at a speed of 300 mm/min and at an initial distance (clamp distance) of 75 mm through a UTM (Universal Testing Machine), was measured.

(4) Elongation (%)

When the tensile strength of the fabric was measured, the initial distance of the fabric when the tension starts and the distance of the fabric when the fabric was cut were measured, thereby evaluating the elongation through the following equation.

```
Elongation = (Initial distance/Distance upon cutting) ×
100
```

(5) Tearing strength (kgf)

A piece of fabric of 75 mm x 200 mm was made, and a force, which was generated when the fabric was cut at a speed of 300 mm/min and at an initial distance (clamp distance) of 75 mm through a UTM (Universal Testing Machine), was measured.

(6) Air permeability (cfm)

A quantity of air permeation per cubic feet at 125 Pa for one minute was measured (CFM = Cubic feet per min).

Table 1:

| Division | | Nylon 66 475Dtex/420D | |
|---|---|---|---|
| | | Comparison Example 1 | Example 1 |
| Grams per square meter (g/m²) | | 182.5 | 210.2 |
| Thickness (mm) | | 0.29 | 0.29 |
| Tensile Strength (kgf/in) | Warp | 245.2 | 264.5 |
| | Weft | 250.1 | 278 |
| Elongation (%) | Warp | 38.5 | 43.3 |
| | Weft | 40.2 | 45.6 |
| Tearing Strength (kgf) | Warp | 18.3 | 60.4 |
| | Weft | 18.5 | 58.7 |
| Air Permeability (cfm) | | 1.9 | 0.0 |

Table 2:

| Division | | PET 566.5Dtex/500D | |
|---|---|---|---|
| | | Comparison Example 2 | Example 2 |
| Grams per square meter (g/m²) | | 251.6 | 276.9 |
| Thickness (mm) | | 0.31 | 0.31 |
| Tensile Strength (kgf/in) | Warp | 270.6 | 297.8 |
| | Weft | 279.0 | 303.9 |
| Elongation (%) | Warp | 37.1 | 42.7 |
| | Weft | 42.7 | 47 |
| Tearing | Warp | 13.8 | 28.3 |
| Strength (kgf) | Weft | 12.8 | 25.1 |
| Air Permeability (cfm) | | 1.9 | 0.15 |

As appreciated from Tables 1 and 2, it was checked that after the coating liquid was applied to the fabric of the curtain airbag cushion, the tearing strength was increased and the air permeability was 0.15 cfm or less.

The physical properties of the fabrics of the manufactured curtain airbag cushions before and after the sewing were evaluated under the conditions of a room temperature, cycling, heat aging, ozone and humidity and then listed in Tables 3 to 6.

Table 3:

| Fabric Specification | Test Division | | Test Result (kgf) | | |
|---|---|---|---|---|---|
| | | | Mean | Min. | Max. |
| Nylon 66 420D | Tensile Strength | Comparison Example 3 | 50.38 | 47.83 | 53.40 |
| | | Example 1 | 110.93 | 100.13 | 116.95 |
| | Tearing Strength | Comparison Example 3 | 44.85 | 40.41 | 47.93 |
| | | Example 1 | 59.25 | 42.39 | 65.96 |

(continued)

| Fabric Specification | Test Division | | Test Result (kgf) | | |
|---|---|---|---|---|---|
| | | | Mean | Min. | Max. |
| PET 500D | Tensile Strength | Comparison Example 4 | 49.22 | 44.35 | 53.39 |
| | | Example 2 | 106.80 | 96.41 | 113.68 |
| | Tearing Strength | Comparison Example 4 | 34.18 | 30.60 | 40.19 |
| | | Example 2 | 55.97 | 49.43 | 63.95 |

Table 4:

| Fabric Specification | Test Division | | Test Result (MPa) | | |
|---|---|---|---|---|---|
| | | | Mean | Min. | Max. |
| Nylon 66 420D | Tensile Strength | Comparison Example 3 | 52.89 | 45.66 | 59.99 |
| | | Example 1 | 108.43 | 91.31 | 121.87 |
| | Tearing Strength | Comparison Example 3 | 43.49 | 40.21 | 46.61 |
| | | Example 1 | 64.47 | 58.93 | 71.80 |
| PET 500D | Tensile Strength | Comparison Example 4 | 48.94 | 40.40 | 53.27 |
| | | Example 2 | 116.51 | 107.52 | 124.46 |
| | Tearing Strength | Comparison Example 4 | 39.38 | 36.97 | 42.07 |
| | | Example 2 | 55.97 | 47.47 | 61.79 |

Table 5:

| Fabric Specification | Test Division | | Test Result (MPa) | | |
|---|---|---|---|---|---|
| | | | Mean | Min. | Max. |
| Nylon 66 420D | Tensile Strength | Comparison Example 3 | 48.72 | 46.47 | 52.07 |
| | | Example 1 | 130.92 | 107.12 | 151.34 |
| | Tearing Strength | Comparison Example 3 | 36.84 | 35.34 | 38.86 |
| | | Example 1 | 67.20 | 62.51 | 73.26 |
| PET 500D | Tensile Strength | Comparison Example 4 | 50.22 | 48.48 | 54.22 |
| | | Example 2 | 139.73 | 95.97 | 159.05 |
| | Tearing Strength | Comparison Example 4 | 40.60 | 37.73 | 43.09 |
| | | Example 2 | 63.05 | 52.71 | 69.70 |

Table 6:

| Fabric Specification | Test Division | | Test Result (MPa) | | |
|---|---|---|---|---|---|
| | | | Mean | Min. | Max. |
| Nylon 66 420D | Tensile Strength | Comparison Example 3 | 58.10 | 51.95 | 62.59 |
| | | Example 1 | 96.38 | 83.81 | 108.55 |
| | Tearing Strength | Comparison Example 3 | 35.51 | 32.45 | 38.38 |
| | | Example 1 | 64.97 | 54.01 | 71.69 |

(continued)

| Fabric Specification | Test Division | | Test Result (MPa) | | |
|---|---|---|---|---|---|
| | | | Mean | Min. | Max. |
| PET 500D | Tensile Strength | Comparison Example 4 | 53.51 | 50.91 | 56.33 |
| | | Example 2 | 106.18 | 93.79 | 111.00 |
| | Tearing Strength | Comparison Example 4 | 36.74 | 33.33 | 39.94 |
| | | Example 2 | 56.61 | 50.56 | 64.52 |

As appreciated from Tables 3 to 6, it was checked that when the sewing was carried out after the application of sealant under the respective conditions, on average, the tensile strength was increased by 150% or more and the tearing strength was increased by 120% or more, higher than that before the sewing.

The tensile strength of the manufactured curtain airbag cushions before and after the tether connection sealing treatment was evaluated and is shown in Table 7.

Table 7:

| | Tensile Strength (kgf/in) | | | | | |
|---|---|---|---|---|---|---|
| | 1 | 2 | 3 | 4 | 5 | Mean |
| Comparison Example 5 | 164 | 168 | 169 | 164 | 158 | 165 |
| Example 1 | 215 | 220 | 223 | 219 | 218 | 219 |

As appreciated from Table 7, it was checked that when the tether connection portion was sealed, on average, the tensile strength was increased by 130%.

**List of Reference Numerals:**

100 Curtain airbag cushion
110 Panel
120 Seam-sealed portion
130 Wing portion
131 Starting · ending point
140 Openings
150 Tether connection portion

**Claims**

1. A curtain airbag cushion comprising panels, a seam-sealed portion for connecting the panels, a sewing portion sewn along with the seam-sealed portion, openings for discharging air inside the airbag to prevent spreading of the seam-sealed portion when connecting the panels, a tether connection portion which sealant is applied so as to increase tensile strength by more than 120%,
wherein the fabric of the panels is coated with a coating liquid containing a silicone composition,
wherein the coating liquid has the elongation at break of 180% or more; tensile strength of 3.0 MPa or more; tear strength of 4.0 KN/m or more; hardness of 30 or more,
wherein air permeability of the panel applied with the coating liquid is 0.15 cfm or less,
wherein coating amount of the coating liquid is 30 g/m$^2$ or more,
wherein the seam-sealed portion is applied to a sealant containing two-liquid type silicone resin for connecting the panels,
wherein the two-liquid type silicone resin has density of 1 to 1.5 g/cm$^3$; tensile strength of 3.5 MPa or more; elongation of 1,050% or more,
wherein the starting point of the sewing portion is a back stitch structure,

wherein the sewing portion is composed of a sewing yarn made of polyamide or polyester,
wherein the sewing yarn has fineness of 1266 D or more; and stitch number per 25mm of 9 to 15 EA; and the coating margin is 3mm or more; and tensile strength of 18 kgf or more; and the sewing portion is sewn by a lock stitch or chain stitch method,
wherein the sewing portion adjacent to the openings has two sewing lines, and the sewing portion not adjacent to the openings has a one sewing line.


**Patentansprüche**

1. Curtain-Airbag-Kissen, umfassend Paneele, einen Siegelnahtabschnitt zur Verbindung der Paneele, einen genähten Abschnitt, welcher entlang des Siegelnahtabschnittes genäht ist, Öffnungen zum Auslass von Luft im Innern des Airbags, um ein Ausbreiten des Siegelnahtabschnittes beim Verbinden der Paneele zu verhindern, einen Halteverbindungsabschnitt, dessen Versiegelungsmittel derart aufgebracht ist, dass es die Zugfestigkeit um mehr als 120% erhöht,
wobei der Stoff der Paneele mit einer Beschichtungsflüssigkeit beschichtet ist, welche eine Silikonkomponente enthält,
wobei die Beschichtungsflüssigkeit eine Bruchdehnung von 180% oder mehr, eine Zugfestigkeit von 3,0 MPa oder mehr, eine Reißfestigkeit von 4,0 kN/m oder mehr und eine Härte von 30 oder mehr aufweist,
wobei die Luftdurchlässigkeit des Paneels mit hierauf aufgebrachter Beschichtungsflüssigkeit 0,15 cfm oder weniger beträgt,
wobei der Beschichtungsanteil der Beschichtungsflüssigkeit 30 g/m$^2$ oder mehr beträgt,
wobei der Siegelnahtabschnitt auf ein Versiegelungsmittel aufgebracht ist, welches ein Zweikomponenten-Flüssigsilikonharz zur Verbindung der Paneele enthält,
wobei das Zweikomponenten-Flüssigsilikonharz eine Dichte von 1 bis 1,5 g/cm$^3$, eine Zugfestigkeit von 3,5 MPa oder mehr und eine Dehnung von 1,050% oder mehr aufweist,
wobei der Anfangspunkt des genähten Abschnittes eine Rückstichstruktur ist,
wobei der genähte Abschnitt von einem aus Polyamid oder Polyester gefertigten Nähgarn gebildet ist,
wobei der Nähgarn eine Feinheit von 1266 D oder mehr aufweist, die Stichzahl pro 25 mm 9 bis 15 EA beträgt, der Beschichtungssaum 3 mm oder mehr beträgt, die Zugfestigkeit 18 kgf oder mehr beträgt, und der genähte Abschnitt mittels eines Steppstich- oder Kettenstichverfahrens genäht ist,
wobei der an die Öffnungen angrenzende genähte Abschnitt zwei Nahtlinien aufweist, während der nicht an die Öffnungen angrenzende genähte Abschnitt eine einzige Nahtlinie aufweist.


**Revendications**

1. Coussin d'airbag rideau comprenant des panneaux, une partie étanchée pour relier les panneaux, une partie cousue qui est cousue le long de la partie étanchée, des ouvertures pour décharger l'air à l'intérieur de l'airbag de façon à empêcher l'écartement de la partie étanchée lors de la liaison des panneaux, une partie de connexion de longe dont l'enduit est appliqué de façon à accroître la résistance à la traction de plus de 120 % ;
dans lequel le tissu des panneaux est revêtu d'un liquide de revêtement contenant une composition de silicone ;
dans lequel le liquide de revêtement a une élongation à la rupture de 180 % ou davantage ; une résistance à la traction de 3,0 MPa ou davantage ; une résistance au déchirement de 4,0 KN/m ou davantage ; une dureté de 30 ou davantage ;
dans lequel la perméabilité à l'air du panneau sur lequel on a appliqué le liquide de revêtement est de 0,15 cfm ou moins ;
dans lequel la capacité de revêtement du liquide de revêtement est de 30 g/m$^2$ ou davantage ;
dans lequel la partie étanchée est appliquée sur un enduit contenant une résine de silicone de type à deux liquides pour relier les panneaux ;
dans lequel la résine de silicone de type à deux liquides a une densité de 1 à 1,5 g/cm$^3$ ; une résistance à la traction de 3,5 MPa ou davantage ; une élongation de 1,050 % ou davantage ;
dans lequel le point de départ de la partie cousue est une structure à couture arrière ; dans lequel la partie cousue est composée d'un fil de couture fabriqué à partir de polyamide ou de polyester ;
dans lequel le fil de couture a une épaisseur de 1266 D ou davantage ; et dans lequel le nombre de points par 25 mm est de 9 à 15 EA ; et dans lequel la marge de revêtement est de 3 mm ou davantage; et dans lequel la résistance à la traction est de 18 kgf ou davantage ; et dans lequel la partie cousue est cousue par un procédé de point de navette ou de point de chaîne ;

dans lequel la partie cousue adjacente aux ouvertures a deux lignes de couture et dans lequel la partie cousue non adjacente aux ouvertures a une ligne de couture.

FIG. 1

FIG. 2

FIG. 3

FIG. 4

(a)

120

140

(b)

120

FIG. 5

130

110

120

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1365059 A